(19) Europäisches Patentamt
European Patent Office
Office européen des brevets

(11) Veröffentlichungsnummer : **0 032 176 B2**

# (12) NEUE EUROPÄISCHE PATENTSCHRIFT

(45) Veröffentlichungstag der neuen Patentschrift :
**29.04.92 Patentblatt 92/18**

(51) Int. Cl.$^5$ : **C04B 35/00**

(21) Anmeldenummer : **80107089.7**

(22) Anmeldetag : **15.11.80**

## (54) Wärmeisolationsmischung und Verfahren zu deren Herstellung.

(30) Priorität : **09.01.80 DE 3000542**

(43) Veröffentlichungstag der Anmeldung :
**22.07.81 Patentblatt 81/29**

(45) Bekanntmachung des Hinweises auf die Patenterteilung :
**25.07.84 Patentblatt 84/30**

(45) Bekanntmachung des Hinweises auf die Entscheidung über den Einspruch :
**29.04.92 Patentblatt 92/18**

(84) Benannte Vertragsstaaten :
**BE DE FR GB IT NL**

(56) Entgegenhaltungen :
**EP-A- 0 002 502**
**DE-A- 2 211 377**
**DE-A- 2 403 783**
**DE-A- 2 754 517**
**DE-B- 2 446 278**
**DE-B- 2 537 492**
**DE-U- 7 518 315**
**US-A- 3 055 831**

(73) Patentinhaber : **Degussa Aktiengesellschaft**
**Weissfrauenstrasse 9**
**W-6000 Frankfurt am Main 1 (DE)**

(72) Erfinder : **Schwarz, Rudolf, Dr.**
**Taunusstrasse 2**
**W-8755 Alzenau 2 (DE)**
Erfinder : **Kleinschmit, Peter, Dr.**
**Wildaustrasse 19**
**W-6450 Hanau 9 (DE)**

EP 0 032 176 B2

**Beschreibung**

Wärmeisolationsmischungen werden, umgeben von porösen Hüllen, zu Platten verpreßt und zur Wärmeisolierung von beispielsweise Wärmespelcheröfen, Herdplatten oder Heizhauben eingesetzt.

Es sind Wärmeisolationsmischungen, welche feinteiliges Siliciumdioxid als Hauptbestandteil enthalten, bekannt, die aufgrund ihrer außerordentlich geringen Wärmeleitfähigkeit als ausgezeichnete Wärmeisolationsmittel in erheblichem Umfange zur Anwendung kommen. Die Anwendbarkeit der Wärmeisolationsmischungen reicht im Hochtemperaturbereich bis in die Nähe von 1000 °C. Wärmeisolationsmischungen können in loser Schüttung bei geeigneter Einmantelung oder als Stampfmasse zur Anwendung kommen. Im allgemeinen werden die Wärmeisolationsmischungen als Granulat entsprechend BE-A-857 490 kompaktiert oder in Platten bzw. Formstücken (Kompaktate) fester Abmessungen gemäß DE-B-20 36 124 zum Einsatz gebracht. Für den Fall der Kompaktierung sind diesen Wärmeisolationsmischungen Bindemittel oder vorzugsweise anorganische Fasern zur Erhöhung der mechanischen Festigkeit in kleinen Anteilen beigegeben. Als weitere Komponente enthalten diese Kompositionen häufig ein Trübungsmittel, wie beispielsweise Titan oder Zirkondioxid, zum Zweck der Erhöhung der wärmedämmenden Eigenschaften durch Streuung der Wärmestrahlung.

Aus der DE-A-27 54 517 ist es bekannt, auf gepreßte Wärmedämmkompaktate Organosiliciumverbindungen aufzubringen, um diese Kompaktate wasserabweisend zu machen.

Aus der US-A-3.055.831 sind starre Wärmeisolationskörper bekannt, welche pyrogen hergestellte Kieselsäuren, Trübungsmittel und anorganische Faser enthalten. Aufgrund des zusätzlich verwendeten Bindemittels, wie z. B. Phenol-Formaldehyd-Harz, werden beliebig gestaltete, steife Wärmeisolationskörper erhalten.

Aus der europäischen Patentanmeidung EP-A1-27 264 (Priorität 13.10.79 and 18.10.79, Anmeldetag 10.10.80, Veröffentlicht : 24.04.81 ) sind Wärmeisolationskörper bekannt, weiche teilchenförmiges isoliermaterial und Trübungsmittel enthalten und durch ein anorganisches oder organisches Bindemittel zusammengehalten werden.

Ein wesentliches Beurteilungskriterium der Qualität der Wärmeisolationsmischung ist in erster Linie ihre Wärmeleitfähigkeit. Für die Beurteilung ist aber auch die Formfestigkert dieser Kompaktate wesentlich. Denn wenn die Kompaktate durch Schrumpfung ihre geometrischen Abmessungen verändern, vermindern sich nicht nur ihre wärmedämmenden Eigenschaften selbst, es entstehen vielmehr auch Zwischenräume in der Isolationsschicht, die zu einem Verlust der isolationswirkung führen.

Jedem Fachmann ist bekannt, daß bei Kompaktaten der Anwendungsspielraum bei Einsatz von pyrogenen Hochtemperaturaerogelen aufgrund solcher Schrumpfungsvorgänge eingeschränkt ist. So dürfen z. B. Kompaktate mit pyrogenem hochdispersen Siliciumdioxid über längere Zeit nur bis maximal 950 °C und kurzzeitig bis nur ca. 1 000 °C thermisch belastet werden. Selbst unter diesen Bedingungen ist bereits eine starke Verringerung der Abmessungen um zum Teil 24 % feststellbar. Nun ist aber gerade auf den Einsatzgebieten der vorgenannten Kompaktate, z. B. dem Industrie-Ofenbau, der Herstellung von Hochtemperatur-Wärmespeichern und der Erstellung feuerhemmender Einrichtungen, der Temperaturbereich oberhalb 950 °C von besonderem Interesse.

Es besteht somit das Bedürfnis, eine Wärmeisolationsmischung zu erhalten, welche bei einer Temperatur oberhalb 950°C eine möglichst geringe Schrumpfung aufweist und somit die gewünschte Isolierwirkung aufrechterhält.

Gegenstand der Erfindung ist eine pyrogene Kieseisäure, Trübungsmittel und anorganische Faser enthaltende Wärmeisolationsmischung, weiche dadurch gekennzeichnet ist, daß sie 10 bis 80 Gew.-% pyrogen hergestellter Kieselsäure, 5 bis 40 Gew.% eines Trübungsmittels, 1 bis 10 Gew.% einer anorganischen Faser und 1 bis 20 Gew.-% einer oder verschiedener Organosiliciumverbindungen enthält, wobei die Organosiliciumverbindungen den Formeln

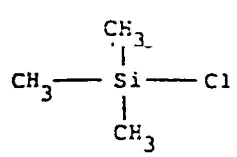

oder

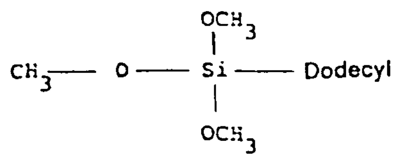

oder

$R_x{}^1SI\ (OR^2)_{4-x}$, wobei

$R^1$, $R^2$ = Methyl, Ethyl, Propyl, Butyl und x = 0 bis 3 bedeuten, oder

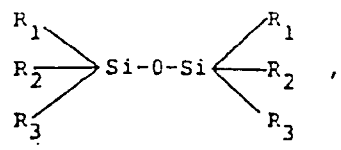

wobei

$R_1$ = Methyl, Ethyl, Propyl,

$R_2$, $R_3$ = Methyl, Ethyl, Propyl, bedeuten, oder

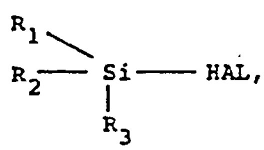

wobei $R_1$ = Methyl, Ethyl, Propyl, Butyl, Pentyl, Hexyl, Heptyl und Isomere, $R_2$ = Halogen, Methyl, Ethyl, Propyl Methoxy, Ethoxy, Propoxy, Butoxy, $R_3$ = Methoxy, Ethoxy, Butoxy bedeuten, entsprechen.

Ein weiterer Gegenstand der Erfindung ist eine pyrogene Kieselsäure, Trübungsmittel und anorganische Faser enthaltende Wärmeisolationsmischung, welche dadurch gekennzeichnet ist, daß sie 10 bis 80 Gew.-% pyrogen hergestellter Kieselsäure, 5 bis 40 Gew.-% eines Trübungsmittels, 1 bis 10 Gew.-% einer anorganischen Faser und 1 bis 20 Gew.-%, einer oder verschiedener Organosiliciumverbindungen enthält, wobei die Organosiliciumverbindungen den Formeln

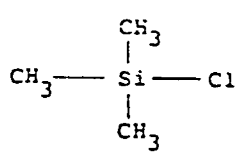

oder

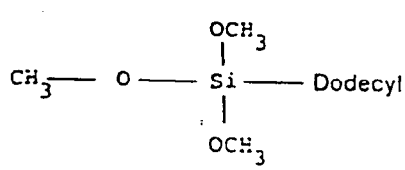

oder

$R_x{}^1Si(OR^2)_{4-x}$, wobei

$R^1$, $R^2$ = Methyl, Ethyl, Propyl, Butyl und x = 0 bis 3 bedeuten, oder

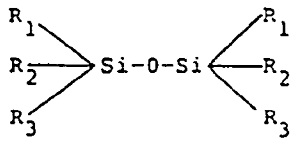 ,

wobei

$R_1$ = Methyl, Ethyl, Propyl,

$R_2$, $R_3$ = Methyl, Ethyl, Propyl, bedeuten, oder

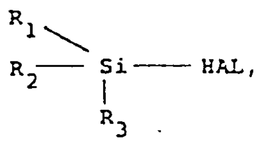

wobei

$R_1$ = Methyl, Ethyl, Propyl, Butyl, Pentyl, Hexyl, Heptyl und Isomere.

$R_2$ = Halogen, Methyl, Ethyl, Propyl, Methoxy, Ethoxy, Propoxy, Butoxy.

$R_3$ = Methoxy, Ethoxy, Butoxy bedeuten und wobei zumindest ein Teil der pyrogen hergestellten Kieselsäure mit der Organosiliciumverbindung im Sinne einer Hydrophobierungsreaktion umgesetzt worden ist.

Die erfindungsgemäße Wärmeisolationsmischung kann durch Vermischen von pyrogen hergestellter Kieselsäure, Trübungsmittel, anorganischer Faser und Organosiliciumverbindung hergestellt werden, indem man eine oder verschiedene Organosiliciumverbindungen verwendet, welche den Formeln

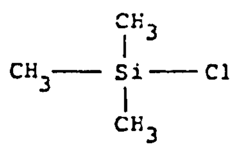

oder

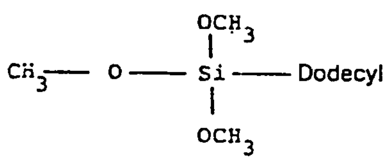

oder

$R_x^1Si(OR^2)_{4-x}$, wobei

$R^1$, $R^2$ = Methyl, Ethyl, Propyl, Butyl und x = 0 bis 3 bedeuten, oder

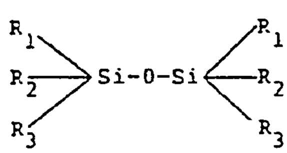 ,

wobei

$R_1$ = Methyl, Ethyl, Propyl,

$R_2$, $R_3$ = Methyl, Ethyl, Propyl, bedeuten, oder

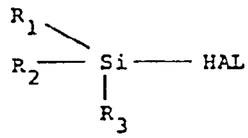

wobei

$R_1$ = Methyl, Ethyl, Propyl, Butyl, Pentyl, Hexyl, Heptyl und Isomere,
$R_2$ = Halogen, Methyl, Ethyl, Propyl, Methoxy, Ethoxy, Propoxy, Butoxy,
$R_3$ = Methoxy, Ethoxy, Butoxy bedeuten, entsprechen.

Die genannten Alkyl-Gruppen können zusätzlich Substituenten, wie z. B. Halogen oder Amino-Gruppen aufweisen.

Unter pyrogen hergestellter Kieselsäure versteht man eine Kieselsäure, welche beispielsweise aus $SiCl_4$ mittels Flammenhydrolyse hergestellt.wird und unter dem Namen Aerosil® in den Handel gebracht wird.

In einer Ausführungsform der Erfindung kann die pyrogen hergestellte Kieselsäure eine BET-Oberfläche von 100 bis 400 $m^2/g$, vorzugsweise 100 bis 370 $m^2/g$, insbesondere von 300±30 $m^2/g$ aufweisen.

Als Trübungsmittel kann die Wärmeisolationsmischung z. B. Titandioxid (in Form von Rutil), oder limenit enthalten.

Als anorganische Faser können beispielsweise Aluminiumsilikatfasern verwendet werden.

Die erfindungsgemäße Wärmeisolationsmischung kann hergestellt werden, indem man die Komponenten der Wärmeisolationsmischung mit der Organosiliciumverbindung vermischt.

So kann man beispielsweise in einer bevorzugten Ausführungsform zumindest einen Teil der pyrogen hergestellten Kieselsäure mit der Organosilicium-Verbindung vermischen und diese Mischung, bestehend aus der Organosiliciumverbindung und der pyrogen hergestellten Kieselsäure. mit den weiteren Komponenten der Wärmeisolationsmischung vermischen.

In einer weiteren Ausführungsform der Erfindung kann man zumindest einen Teil der pyrogen hergestellten Kieselsäure mit der Organosilicium-Verbindung im Sinne einer Hydrophoblerungsreaktion umsetzen und die so hydrophobierte Kieselsäure mit den weiteren Komponenten der Wärmeisolationsmischung vermischen.

Es hat sich als vortellhalt herausgestellt, falls man nicht von einer hydrophobierten Kieselsäure ausgeht, sondern die Organosiliciumverbindung direkt dar Wärmeisolationsmischung beigibt, daß man die Mischung oder die Kompaktate einige Zeit bis zur erstmaligen Verwendung lagert, damit den zum Teil langsam ablaufenden Reaktionen zwischen den, Oberflächengruppen des Siliciumoxides und der Siliciumverbindung ausreichend Zeit zur Vervollständigung gegeben ist.

Bei der Lagerung kann die Reaktion der Organosilicium-Verbindung mit der Kiesalsäure dadurch beschleunigt werden, wenn man die Mischung oder die Kompaktate kurzzeitig auf eine Temperatur von 50 bis 100 °C erwärmt.

In einer weiteren Ausführungsform der Erfindung ist es auch möglich, einen Teil der Organosiliciumverbindung mit der pyrogen hergestellten Kieselsäure zu vermischen bzw. umzusetzen und nach dem Vermischen der so behandelten Kieselsäure mit den anderen Komponenten der Wärmeisolationsmischung den Rest der Organosiliciumverbindung anschließend unterzumischen.

Die erfindungsgemäße Wärmeisolationsmischung wird anhand der folgenden Beispiele näher erläutert und beschrieben :

Beispiel 1 (Vergleichsbeispiel)

Man stellt in einem schnellaufenden Mischgerät mit 5000 UpM aus 130 g einer pyrogenen Kieselsäure, 60 g eines feingemahlenen Rutils und 10 g einer mineralischen Faser auf Basis Aluminiumsilikat eine homogene Mischung her. Ein Teil dieser Mischung wird mit einem hydraulischen Druck von 15 bar zu einer runden Platte mit den Abmessungen 100 x 20 mm, deren Dichte 210 g/l beträgt, verpreßt. Glüht man diese Platte 10 Stunden bei 1000 °C, so schrumpft sie um 24 % ihres Volumens.

Beispiel 2

Man stellt wie in Beispiel 1 beschrieben, eine Mischung, die aus 110 g einer pyrogenen Kieselsäure, 30 g einer pyrogenen und mit Trimethlymonochlorsilan hydrophobierten und anschließend entsäuerten Kieselsäure (C-Gehalt = 1,9 %) gleicher spez. Oberfläche, 60 g Rutil und 10 g Aluminiumsilikatfaser besteht, her. Diese Mischung wird wie in Beispiel 1 beschrieben, zu einer Platte verpreßt. Bei 10-stündiger Glühung der Probeplatte bei 1000 °C erfolgt eine Schrumpfung des Plattenvolumens um 16 %.

Beispiel 3

16 g Tetraäthoxysilan werden in 10 g pyrogene Kieselsäure mit Hilfe einer hochtourigen Laborschlägermühle eingearbeitet und homogen verteilt. Diese Mischung wird mit 120 g pyrogener Kieselsäure, 60 g Rutil und 10 g Aluminiumsilikatfasern vermischt und bei 5000 Upm in einem Mischer homogenisiert. Nach einer Lagerzeit von 3 Tagen wird die Mischung gemäß Beispiel 1 verpreßt. Bei Glühung der Platte bei 1000 °C über einen Zeitraum von 10 Stunden ergibt sich eine Schrumpfung des Volumens um 17 %.

Beispiel 4

12 g eines Kieselsäureesters mit 40 Gew.% $SiO_2$, welcher durch Teilhydrolyse von Tetraäthoxysilan erhalten wird, werden in 10 g pyrogener Kieselsäure mit Hilfe einer hochtourigen Laborschlägermühle eingearbeitet und homogen verteilt. Diese Mischung wird mit 120 g pyrogener Kieselsäure, 60 g Rutil und 10 g Aluminiumsilikatfaser vermischt und bei 5 000 UpM in einem Mischer homogenisiert.

Nach einer Lagerzeit von 3 Tagen wird die Mischung gemäß Beispiel 1 verpreßt. Bei der Glühung der Platte bei 1000 °C über einen Zeitraum von 10 Stunden ergibt sich eine Schrumpfung des Volumens um 11 %.

Beispiel 5

Es wird eine Mischung gemäß Beispiel 4 hergestellt und verpreßt. wobei jedoch statt des Kieselsäureesters 10 g Hexamethyldisiloxan verwendet werden.

Die Schrumpfung der Platte beträgt 18 Volumen-%.

Beispiel 6

Es wird eine Mischung gemäß Beispiel 4 hergestellt und verpreßt, wobei statt des Kieselsäureesters 20 g Propyltriäthoxysilan verwendet werden.

Die Schrumpfung der Platte beträgt 16 Volumen-%.

Beispiel 7

Es wird eine Mischung gemäß Beispiel 4 hergestellt und verpreßt, wobei statt des Kieselsäureesters 10 g Dodecyltrimethoxysilan verwendet werden.

Die Schrumpfung der Platte beträgt 14 Volumen-%.

Beispiel 8

Es wird eine Mischung gemäß Beispiel 4 hergestellt und verpreßt, wobei statt des Kieselsäureesters 6 g Diäthyldiäthoxysilan verwendet werden.

Die Schrumpfung der Platte beträgt 16 Volumen-%.

In den genannten Beispielen wird eine pyrogene Kieselsäure mit den folgenden physikalischchemischen Kenndaten eingesetzt :

| | | |
|---|---|---|
| Oberfläche nach BET | $m^2/g$ | 300 ± 30 |
| Mittlere Größe der Primärteilchen | nm | 7 |
| Stampfdichte 1) -normale Ware- | g/l | ca. 50 |
| -verdichtete Ware- | g/l | ca. 120 |
| Trocknungsverlust 2) (2 h bei 105°C) | % | 1,5 |
| Glühverlust 2) (2 h bei 1000°C) | | 2 |
| pH-Wert 3) (in 4 %iger wässriger Dispersion) | | 3,6 - 4,3 |
| $SiO_2$ 5) | % | 99,8 |
| $Al_2O_3$ 5) | % | 0,05 |
| $Fe_2O_3$ 5) | % | 0,003 |
| $TiO_2$ 5) | % | 0,03 |
| HCl 5) 10) | % | 0,025 |
| Siebrückstand 4) nach Mocker (45µm) | % | 0,05 |

1) nach DIN 53 194
2) nach DIN 55 921
3) nach DIN 53 200
4) nach DIN 53 580
5) bezogen auf die 2 Stunden bei 1 000 °C geglühte Substanz
7) bezogen auf die 2 Stunden bei 105 °C getrocknete Substanz
10) HCL-Gehalt ist Bestandteil des Glühverlustet.

## Patentansprüche

1. pyrogene Kieselsäure, Trübungsmittel und anorganische Faser enthaltende Wärmeisolationsmischung, dadurch gekennzeichnet, daß sie 10 bis 80 Gew.-% pyrogen hergestellter Kieselsäure, 5 bis 40 Gew.-% eines Trübungsmittels, 1 bis 10 Gew.-% einer anorganischen Faser und 1 bis 20 Gew.-% einer oder verschiedener Organosiliciumverbindungen enthält, wobei die Organosiliciumverbindungen den Formeln

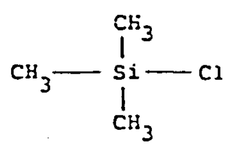

oder

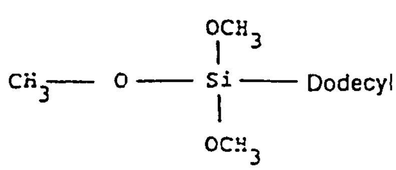

oder

$R_x^1Si(OR^2)_{4-x}$, wobei
$R^1$, $R^2$ = Methyl, Ethyl, Propyl, Butyl und x = 0 bis 3 bedeuten, oder

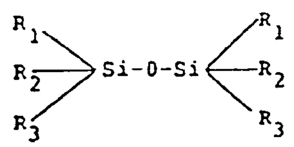 ,

wobei

$R_1$ = Methyl, Ethyl, Propyl,

$R_2$, $R_3$ = Methyl, Ethyl, Propyl, bedeuten, oder

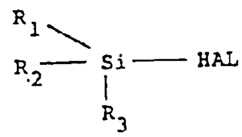 ,

wobei

$R_1$ = Methyl, Ethyl, Propyl, Butyl, Pentyl, Hexyl, Heptyl und Isomere,

$R_2$ = Halogen, Methyl, Ethyl, Propyl Methoxy, Ethoxy, Propoxy, Butoxy,

$R_3$ = Methoxy, Ethoxy, Butoxy bedeuten, entsprechen.

2. Pyrogene Kieselsäure, Trübungsmittel und anorganische Faser enthaltende Wärmeisolationsmishung, nach Ansprüch 1 dadurch gekennzeichnet, daß zumindest ein Teil der pyrogen hergestellten Kieselsäure mit der Organosiliciumverbindung im Sinne einer Hydrophobierungsreaktion umgesetzt worden ist.

3. Verfahren zur Herstellung der bindemittelfreien Wärmeisolationsmischung nach Anspruch 1 durch Vermischen von pyrogen hergestellter Kieselsäure, Trübungsmittel, anorganischer Faser und Organosiliciumverbindung, dadurch gekennzeichnet, daß man eine oder verschiedene Organosiliciumverbindungen verwendet, welche den Formeln

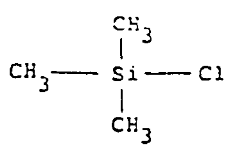

oder

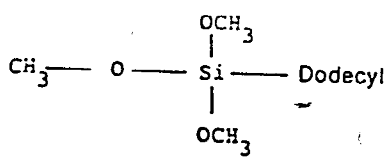

oder

$R_x^1Si(OR^2)_{4-x}$, wobei

$R^1$, $R^2$ = Methyl, Ethyl, Propyl, Butyl und x = 0 bis 3 bedeuten, oder

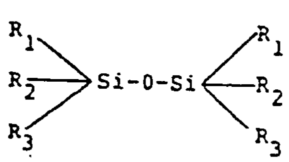 ,

wobei

$R_1$ = Methyl, Ethyl, Propyl,

$R_2$, $R_3$ = Methyl, Ethyl, Propyl, bedeuten, oder

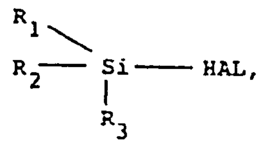

wobei

$R_1$ = Methyl, Ethyl, Propyl, Butyl, Pentyl, Hexyl, Heptyl und Isomere.

$R_2$ = Halogen, Methyl, Ethyl, Propyl, Methoxy, Ethoxy, Propoxy, Butoxy.

$R_3$ = Methoxy, Ethoxy, Butoxy bedeuten, entsprechen.

4. Verfahren zur Herstellung der Wärmeisolationsmischung gemäß Anspruch 3, dadurch gekennzeichnet, daß man zumindest einen Teil der pyrogen hergestellten Kieselsäure mit der Organosiliciumverbindung vermischt und diese Mischung, bestehend aus der Organosiliciumverbindung und der pyrogen hergestellten Kieselsäure, mit den weiteren Komponenten der Wärmeisolationsmischung vermischt.

5. Verfahren zur Herstellung der Wärmeisolationsmischung gemäß Anspruch 2, dadurch gekennzeichnet, daß man zumindest einen Teil der pyrogen hergestellten Kieselsäure mit der Organosiliciumverbindung in Sinne einer Hydrophobierungsreaktion umsetzt, und die so hydrophobierte pyrogen hergestellte Kieselsäure mit den weiteren Komponenten der Wärmeisolationsmischung vermischt.

## Claims

1. A heat insulation mixture containing pyrogenic silica, opacifier and inorganic fibre, characterised , in that it contains from 10 to 80 % by weight of pyrogenically produced silica, from 5 to 40 % by weight of an opacifier, from 1 to 10 % by weight of an inorganic fibre and from 1 to 20 % by weight of one or more organosilicon compounds, and the organosilicon compounds correspond to the formulae

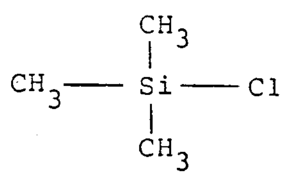

or

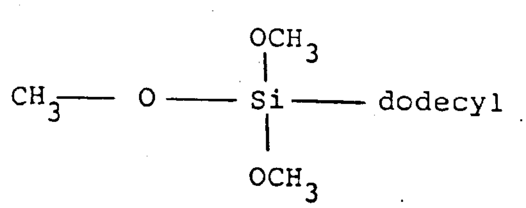

or

$R_x^1$ Si $(OR^2)_{4-x}$, in which

$R^1$, $R^2$ represent methyl, ethyl, propyl or butyl,and x represents 0 to 3, or

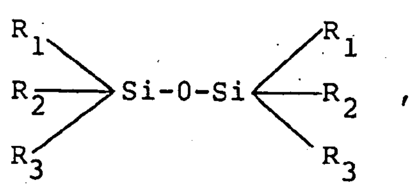

in which

$R_1$ represents methyl, ethyl, propyl, and

$R_2$,$R_3$ represent methyl, ethyl, propyl, or

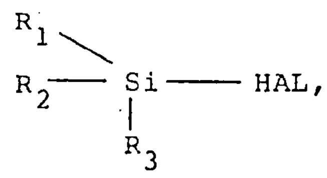

in which

$R_1$ represents methyl, ethyl, propyl, butyl, pentyl, hexyl, heptyl and isomers,

$R_2$ represents halogen, methyl, ethyl, propyl, methoxy, ethoxy, propoxy or butoxy, and

$R_3$ represents methoxy, ethoxy, or butoxy.

2. A heat insulation mixture containing pyrogenic silica, opacifier and inorganic fibre according to claim 1, characterised in that at least some of the pyrogenically produced silica has been rendered hydrophobic by reaction with the organosilicon compound.

3. A process for the production of the binder-free heat insulation mixture according to claim 1 by mixing pyrogenically produced silica, opacifier, inorganic fibre and organosilicon compound, characterised in that one or more organosilicon compounds corresponding to the following formulae are used,

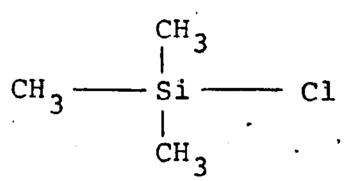

or

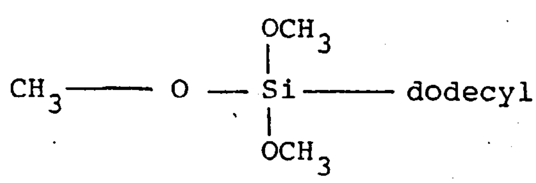

or

$R_x^1$ Si $(OR^2)_{4-x}$, in which

$R^1$, $R^2$ represents methyl, ethyl, propyl or butyl/and x represents 0 to 3, or

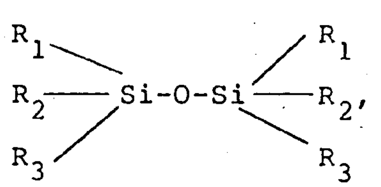

in which

$R_1$ represents methyl, ethyl, propyl, and

$R_2$, $R_3$ represent methyl, ethyl, propyl, methoxy, ethoxy, propoxy, butoxy, halogen, or

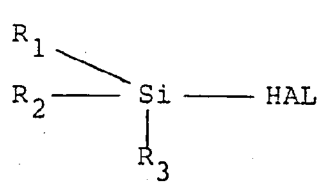

in which

$R_1$ represents methyl, ethyl, propyl, butyl, pentyl, hexyl, heptyl and isomers,
$R_2$ represents halogen, methyl, ethyl, propyl, methoxy, ethoxy, propoxy or butoxy, and
$R_3$ represents methoxy, ethoxy, or butoxy.

4. A process for the production of the heat insulation mixture according to claim 3, characterised in that at least some of the pyrogenically produced silica is mixed with the organosilicon compound and this mixture, consisting of the organosilicon compound and the pyrogenically produced silica is mixed with the other components of the heat insulation mixture.

5. A process for the production of the heat insulation mixture according to claim 2, characterised in that at least some of the pyrogenically produced silica is rendered hydrophobic by reaction with the organosilicon compound, and thus rendered hydrophobic, the pyrogenically produced silica is mixed with the other components of the heat insulation mixture.

## Revendications

1. Composition calorifuge contenant de l'acide silicique pyrogéné, un agent opacifiant et des fibres minérales, composition caractérisée en ce qu'elle contient 10 à 80 % en poids d'acide silicique pyrogéné, 5 à 40 % en poids d'un agent opacifiant, 1 à 10 % en poids d'une fibre minérale et 1 à 20 % en poids d'un ou de plusieurs composés organo-siliciques, où les composés organo-siliciques correspondent aux formules :

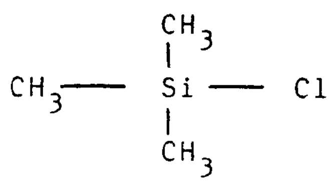

ou

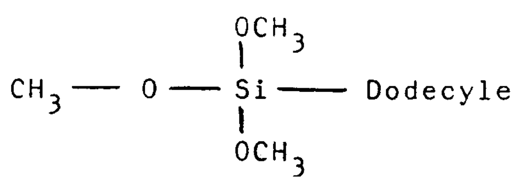

ou

$R_x^1\ Si\ (OR^2)_{4-x}$, où
$R^1$, $R^2$ = Méthyle, Ethyle, Propyle, Butyle et x = 0 à 3 ou

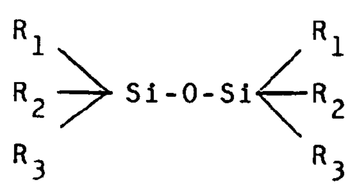

,

où

$R_1$ = Méthyle, Ethyle, Propyle,
$R_2$, $R_3$ = Méthyle, Ethyle, Propyle, ou

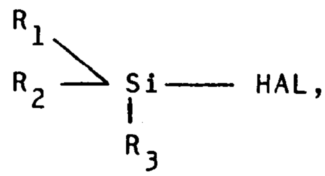

où

$R_1$ = Méthyle, Ethyle, Propyle, Butyle, Pentyle, Hexyle, Heptyle et leurs isomères,
$R_2$ = Halogène, Méthyle, Ethyle, Propyle, Méthoxy, Ethoxy, Propoxy, Butoxy,
$R_3$ = Méthoxy, Ethoxy, Butoxy.

2. Composition calorifuge contenant de l'acide silicique pyrogéné, un agent opacifiant et des fibres minérales selon la revendication 1, composition caractérisée en ce que l'on fait réagir au moins une partie de l'acide silicique pyrogéné avec le composé organo-silicique dans le sens d'une réaction ayant pour but de le rendre hydrophobe.

3. Procédé pour la préparation de la composition calorifuge exempte de liant selon la revendication 1, par mélange d'acide silicique pyrogéné, d'un agent opacifiant de fibres minérales et de composés organosiliciques, procédé caractérisé en ce que l'on utilise un ou plusieurs composés organo-siliciques correspondant aux formules :

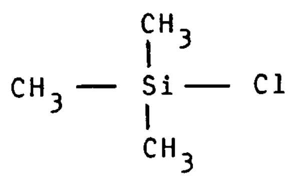

ou

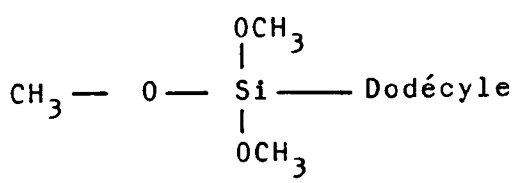

ou

$R_x^1$ Si $(OR^2)_{4-x}$, où
$R^1$, $R^2$ = Méthyle, Ethyle, Propyle, Butyle et x = 0 à 3 ou

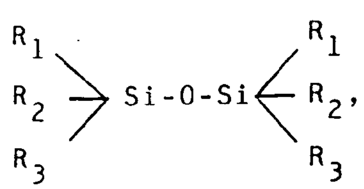

où

$R_1$ = Méthyle, Ethyle, Propyle,
$R_2$, $R_3$ = Méthyle, Ethyle, Propyle, ou

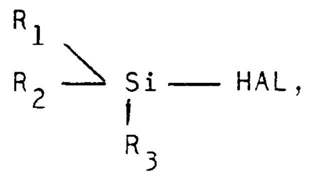

où

$R_1$= Méthyle, Ethyle, Propyle, butyle, Pentyle, Hexyle, Heptyle et leurs isomères,
$R_2$ = Halogène, Méthyle, Ethyle, Propyle, Méthoxy, Ethoxy, Propoxy, Butoxy,
$R_3$ = Méthoxy, Ethoxy, Butoxy.

4. Procédé pour la préparation de la composition calorifuge selon la revendication 3, caractérisé en ce que l'on mélange au moins une partie de l'acide silicique pyrogéné avec le composé organo-silicique et que l'on mélange ce mélange constitué du composé organosilicique et de l'acide silicique pyrogéné, avec les autres composants de la composition calorifuge.

5. Procédé pour la préparation de la composition calorifuge suivant la revendication 2, caractérisé en ce que l'on fait réagir au moins une partie de l'acide silicique pyrogéné avec le composé organosilicique, afin de rendre cet acide hydrophobe, et que l'on mélange ensuite l'acide silicique pyrogéné rendu ainsi hydrophobe, avec les autres constituants de la composition calorifuge.